(19) Europäisches Patentamt
European Patent Office
Office européen des brevets

(11) Veröffentlichungsnummer: **0 241 796 B1**

(12) **EUROPÄISCHE PATENTSCHRIFT**

(45) Veröffentlichungstag der Patentschrift: **23.09.92**

(51) Int. Cl.$^5$: **C08F 230/08**, C08F 226/00, G02B 1/04

(21) Anmeldenummer: **87104657.9**

(22) Anmeldetag: **30.03.87**

Die Akte enthält technische Angaben, die nach dem Eingang der Anmeldung eingereicht wurden und die nicht in dieser Patentschrift enthalten sind.

# (54) Kontaktoptische Gegenstände.

(30) Priorität: **10.04.86 DE 3612015**
**14.03.87 DE 3708308**

(43) Veröffentlichungstag der Anmeldung:
**21.10.87 Patentblatt 87/43**

(45) Bekanntmachung des Hinweises auf die Patenterteilung:
**23.09.92 Patentblatt 92/39**

(84) Benannte Vertragsstaaten:
**AT BE CH DE ES FR GB IT LI NL SE**

(56) Entgegenhaltungen:
**EP-A- 0 184 727**
**EP-A- 0 186 789**
**US-A- 4 152 508**
**US-A- 4 182 822**
**US-A- 4 343 927**

(73) Patentinhaber: **BAYER AG**

**W-5090 Leverkusen 1 Bayerwerk(DE)**

(72) Erfinder: **Wingler, Frank, Dr.**
**Walter-Flex-Strasse 17**
**W-5090 Leverkusen 1(DE)**
Erfinder: **Geyer, Otto-Christian, Dr.**
**Bahnhofstrasse 12**
**W-6330 Wetzlar(DE)**

**EP 0 241 796 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft kontaktoptische Gegenstände, die aus einem benetzbaren, gegebenenfalls vernetzten, Copolymerisat bestehen, das als Komponenten N-Vinylcarbonsäureamid, ein (Meth)acrylsäureester eines Polysiloxans oder eines Gemisches hieraus und gegebenenfalls ein Vinylmonomer enthält und ein Verfahren zu ihrer Herstellung.

Kontaktoptische Gegenstände im Rahmen der vorliegenden Erfindung sind bevorzugt Kontaktlinsen und Sclerallinsen.

Kontaktlinsen aus Copolymeren von Polysiloxan-Methacrylsäureestern, Acryl- oder Methacryl- oder Itaconsäurealkylestern, hydrophilen Monomeren wie N-Vinylpyrrolidon, Hydroxyethylmethacrylat, (Meth)-acrylamid, Diacetonacrylami und gegebenenfalls vernetzend wirkenden Monomeren wie z.B. Ethylen-glykol-dimethacrylat sind bekannt (US 38 08 178; US 42 16 303; DE-A-23 63 627; WO 83/017777; P. Rosenthal, CONTAKT LENS FORUM; August 1982, S. 47-57 und T. R. Williams, M.D. Nave, Polym. Mater. Sci. Eng. 52, S. 279-283 (1985)). Von Nachteil ist jedoch die schlechte Oberflächenbenetzbarkeit der Kontaktlinsen. Durch nachträgliche Hydrophilierung der Oberfläche, z.B. durch Coronaentladung oder Plasmabehandlung versucht man, diesen Nachteil auszugleichen. Die Hydrophilierungsschicht besitzt jedoch keine lange Beständigkeit. Nach längerem Tragen verlieren die Kontaktlinsen ihre Benetzbarkeit und damit ihre Verträglichkeit.

Es wurden kontaktoptische Gegenstände aus benetzbaren, gegebenenfalls vernetzten, Copolymerisaten aus olefinisch ungesättigten Monomeren gefunden, die dadurch gekennzeichnet sind, daß das Copolymerisat als Komponenten

A) 4 bis 55 Gew.-Teile eines N-Vinylcarbonsäureamids der Formel

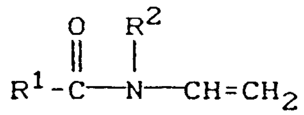

(I),

in der

$R^1$ und $R^2$ gleich oder verschieden sind und Wasserstoff oder $C_1$-$C_6$-Alkyl bedeuten,

B) 96 bis 30 Gew.-Teile von (Meth)acrylsäureester eines Polysiloxans und gegebenenfalls

C) bis zu 66 Gew.-Teile eines Vinylmonomers

enthält.

Die erfindungsgemäßen kontaktoptischen Gegenstände zeigen überraschenderweise eine hohe Sauerstoffdurchlässigkeit, eine gute Benetzbarkeit und weisen auch nach längerem Tragen eine geringe Affinität für Lipoidablagerung auf.

Monomere für die Komponente A) sind N-Vinylcarbonsäureamide der Formel (I).

$C_1$-$C_6$-Alkyl bedeutet hierbei im allgemeinen einen geradkettigen oder verzweigten Kohlenwasserstoffrest. Beispielsweise seien Methyl, Ethyl, Propyl, Isopropyl, Butyl, Isobutyl, Pentyl, Isopentyl, Hexyl und Isohexyl genannt.

Die N-Vinylcarbonsäureamide sind an sich bekannt (J.P.Fischer u. S. Rosinger, Makromol. Chem. 184, S. 1247-1254 (1983) u. R.W. Stackman, R. H. Summerville Ind. Eng. chem. Prod. Res. Dev. 24, Nr. 2, S. 242-246 (1985) und können beispielsweise durch Umsetzung von Carbonsäureamiden mit Acetylen hergestellt werden.

Es ist auch möglich, Gemische des erfindungsgemäßen Vinylcarbonsäureamids umzusetzen.

Bevorzugtes N-Vinylcarbonsäureamid ist N-Methyl-N-vinylacetamid.

Die erfindungsgemäßen kontaktoptischen Gegenstände enthalten im allgemeinen 4 bis 55 Gew.-Teile, bevorzugt 5 bis 15 Gew.-Teile, an N-Vinylcarbonsäureamid.

Monomere für die Komponente B) sind (Meth)acrylsäureester eines Polysiloxans.

(Meth)acrylsäureester eines Polysiloxans können beispielsweise sein:

1. Verbindungen der Formel

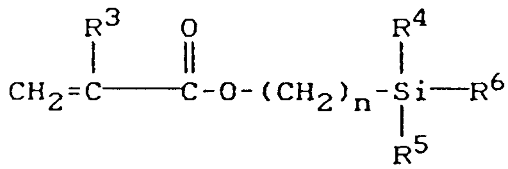 (II),

in der

- n für eine Zahl von 1 bis 4 steht,
- $R^3$ Wasserstoff oder Methyl bedeutet,
- $R^4$, $R^5$ und $R^6$ gleich oder verschieden sind und Alkoxyl, $C_1$-$C_6$-Alkyl, Cycloalkyl, Aryl, Trimethylsiloxyl oder Polysiloxan bedeuten,

2. Verbindungen der Formel

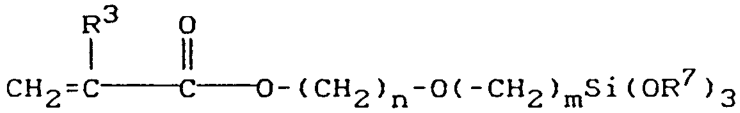 (III),

in der

- n und m gleich oder verschieden sind und jeweils für eine Zahl von 1 bis 4 stehen,
- $R^3$ Wasserstoff oder Methyl bedeutet,
- $R^7$ $C_1$-$C_6$-Alkyl, Cycloalkyl oder Polysiloxan bedeutet,

3. Verbindungen der Formel

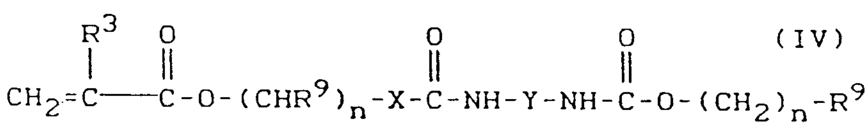 (IV) ,

in der

- n für eine Zahl von 1 bis 4 steht,
- $R^3$ Wasserstoff oder Methyl bedeutet,
- $R^8$ Wasserstoff, $C_1$-$C_6$-Alkyl oder Hydroxy bedeutet,
- $R^9$ für Polysiloxan steht,
- X Sauerstoff, Schwefel oder den Rest,

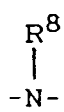 ,

in der

- $R^8$ die obengenannte Bedeutung hat, bedeutet, und
- Y für ein zweibindiges $C_2$ bis $C_{24}$-Alkylen, $C_5$ bis $C_9$ Cycloalkylen, $C_6$ bis $C_{12}$ Arylen oder einen zweibindigen Rest mit 7 bis 20 Kohlenstoffatomen aus Alkylen, Cycloalkylen und/oder Arylengruppen steht,

und

4. Verbindungen der Formel

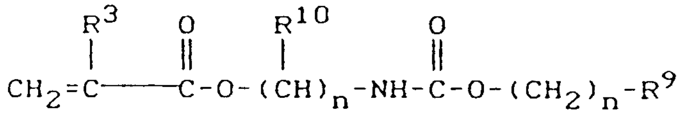 (V)

in der

- n für eine Zahl von 1 bis 6 steht,
- $R^3$ Wasserstoff oder Methyl bedeutet,
- $R^9$ für Polysiloxan steht und
- $R^{10}$ Wasserstoff, $C_1$-$C_6$-Alkyl oder Cycloalkyl bedeutet.

$C_1$-$C_6$-Alkyl bedeutet im allgemeinen hierbei einen geradkettigen oder verzweigten Kohlenwasserstoffrest. Beispielsweise sei Methyl, Ethyl, Propyl, Isopropyl, Butyl, Isobutyl, Pentyl, Isopentyl, Hexyl und Isohexyl genannt. Bevorzugt sind Methyl und Ethyl.

Cycloalkyl bedeutet im allgemeinen hierbei einen cyclischen Kohlenwasserstoffrest mit 5 bis 9 Kohlenstoffatomen. Beispielsweise seien Cyclopentyl, Cyclohexyl, Cycloheptyl und Cyclooctyl genannt. Bevorzugt werden Cyclopentyl und Cyclohexyl.

Alkoxy bedeutet im allgemeinen hierbei einen über Sauerstoff gebundenen geradkettigen oder verzweigten Kohlenwasserstoffrest mit 1 bis 8 Kohlenstoffatomen. Bevorzugt wird Alkoxy mit 1 bis 8 Kohlenstoffatomen. Beispielsweise sei Methoxy, Ethoxy, Propoxy, Isopropoxy, Butoxy, Isobutoxy, Pentoxy, Isopentoxy, Hexoxy und Isohexoxy genannt. Bevorzugt werden Methoxy und Ethoxy.

Aryl bedeutet im allgemeinen hierbei einen aromatischen Kohlenwasserstoffrest mit 6 bis 12 Kohlenstoffatomen. Beispielsweise seien Phenyl, Naphthyl und Biphenyl genannt. Bevorzugter Arylrest ist Phenyl.

$C_2$ bis $C_{24}$ Alkylen bedeutet im allgemeinen eine zweibindige geradkettige oder verzweigte Kohlenwasserstoffkette. Bevorzugt werden Alkylenreste mit 6 bis 9 Kohlenstoffatomen, Beispielsweise seien die folgenden $C_2$ bis $C_{24}$ Alkylenreste genannt: Methylen, Propylen, Trimethylen, Tetramethylen, Pentamethylen, 2,2-Dimethyltrimethylen, Hexamethylen, 2,2,4-Trimethylhexamethylen, Insbesondere bevorzugt sind Hexamethylen und 2,2,4-Trimethylhexamethylen.

$C_5$ bis $C_9$ Cycloalkylen bedeutet im allgemeinen hierbei einen zweibindigen cyclischen Kohlenwasserstoffrest. Bevorzugt werden $C_5$ und $C_6$ Alkylenreste, Beispielsweise seien die folgenden $C_5$ bis $C_9$ Cycloalkylenreste genannt: 1,4-Cyclohexylen, 2-Methyl-1,4-cyclohexylen, 5-Methylen-3,3,5-trimethylcyclohexyl-1.

$C_6$ bis $C_{12}$ Arylen bedeutet im allgemeinen einen zweibindigen aromatischen Kohlenwasserstoffrest, Bevorzugt wird der Phenylen-, Naphthylen- und Biphenylenrest.

Als zweibindige Reste mit Alkylen, Cycloalkylen und/oder Arylengruppen mit 7 bis 20 Kohlenstoffatomen seien Methylen-di-p-phenylen und 2,2-Propylen-di-p-phenylen genannt.

Polysiloxan bedeutet im allgemeinen bevorzugt verzweigt aufgebaute Polysiloxane der mittleren Molmasse von 73 bis 10.000, die vorwiegend folgende Struktureinheiten enthalten:

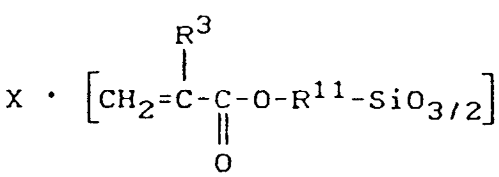 ; $Y \cdot [R_2^{12}SiO]$ ;

$Z \cdot [R_2^{12}SiO_{1/2}]$ ,

- $R^1$ Wasserstoff oder Methyl bedeutet,
- $R^{11}$ einen divalenten $C_1$ bis $C_{15}$-Alkylen-Rest bedeutet,
- $R^{12}$ einen monovalenten $C_1$-$C_6$-Alkyl, Aryl- oder Cycloalkyl-Rest bedeutet,

wobei die Faktoren X, Y und Z folgendermaßen bestimmt sind

$X + Y + Z = 1,$
$0 \leq X \leq 0{,}8$

$0 \leqq Y \leqq 0{,}8$
$0 \leqq Z \leqq 0{,}8.$

(Meth)acrylat-funktionalisierte Polysiloxane der Formel (II) können beispielsweise sein:
$\gamma$-Methacryloxypropyl-trimethoxysilan (MEMO):

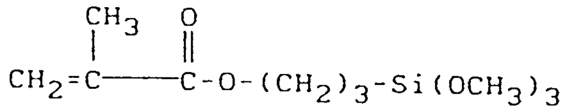

sowie dessen Derivate, wie beispielsweise $\gamma$-Methacryloxypropyl-tris(trimethylsiloxy)silan (TRIS):

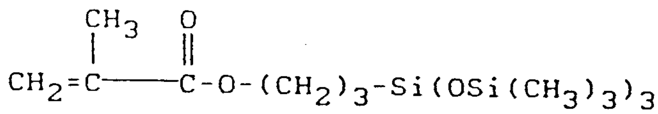

und 1,3-Bis($\gamma$-methacryloxypropyl)-1,1,3,3-tetra(trimethylsiloxy)disiloxan (TETRA) (DE-A-3 244 877):

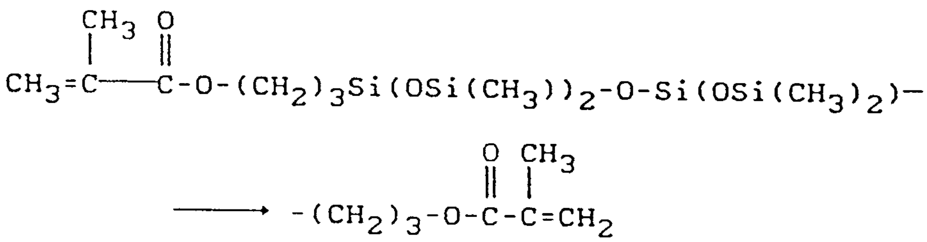

und Hydrolyseprodukte der Reaktion von $\gamma$-Methacryloxypropyl-trimethoxysilan mit Dichlorodimethylsilan und Chlorotrimethylsilan (DE-A-3 329 722).

Weitere (Meth)acrylat-funktionalisierte Polysiloxane der Formel (II) sind bekannt aus US-4 216 303, US-4 303 772, DE-A-3 002 683, WO-82/00352 und FO-A-108 886; (M.A. Al-Issa et al., Europ. Polym. J. Vol. 20, Nr. 10, S. 947 bis 950 (1984); T.F. Blahorici et al. Polym. Eng. and Sci. Vol. 22, Nr. 17, S. 1123 bis 1126 (1982)).

Als Beispiele hierfür seien genannt:
$\gamma$-Methacyloxypropylpentamethyldisiloxan:

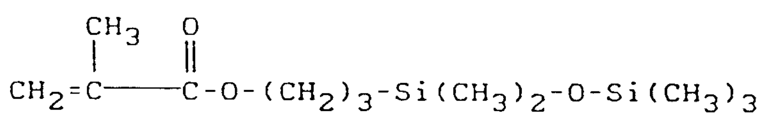

und $\gamma$-Methacryloxypropyl-dimethyl(nonamethyltetrasiloxan)silan:

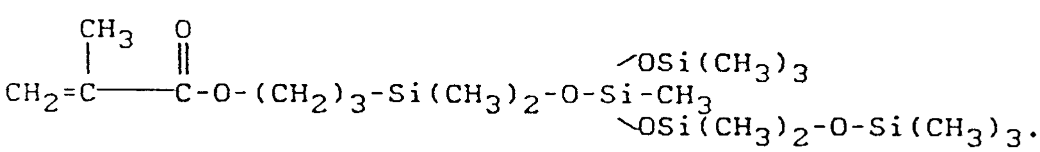

(Meth)acrylat-funktionalisierte Polysiloxane der Formel (III) sind beispielsweise Umsetzungsprodukte von $\beta$-Allyloxyethyl-methacrylat mit SiH-Gruppen haltigen Polysiloxanen (EP-A-130 731).

Für Verbindungen der Formel IV seien beispielsweise Silikon(meth)acrylat-Makromere genannt, die durch Umsetzung von hydroxylalkyl-terminierten Polysiloxanen wie z.B. Polydimethylsiloxan-triol mit 1-Isocyanatomethyl-5-isocyanato-1,3,3-trimethylcyclohexan und $\beta$-Hydroxyethyl(meth)acrylat hergestellt werden können. Der (Meth)acryl-Rest ist mit dem Polysiloxanrest über Urethan, Thiourethan, Harnstoff oder Amidfunktionen verknüpft. Diese Verbindungsgruppe ist aus E. Gorden Cameron und M.S. Chisholm, Polymer 1985, Vol. 26, Nr. 3, S. 437 bis 442; US 4 136 250 und EP-A-109 355 bekannt.

Die (Meth)acrylsäureester eines Polymethylsiloxans der Formel (V) können durch Umsetzung von Isocyanatoethyl(meth)acrylat mit Hydroxyalkyl oder Aminoalkyl-terminierten Polydimethylsiloxanen oder Octamethylcyclotetrasiloxanen hergestellt werden (EP-A-127 321; X. YU, H.R. Nagarajan et al., J. of Applied Polym Sci. 30, 2115-2135 (1985)).

Die Polymerisation wird durch in Radikale zerfallenden Initiatoren bei Temperaturen von 20 bis 120 °C durchgeführt. Die Polymerisation kann dabei durch Wärme oder auch durch Licht ausgelöst werden. Die Initiatoren sind in Radikale zerfallende Azoverbindungen wie Azoisobuttersäuredinitril oder Peroxyde wie tert.-Butylpercarbonsäureester oder Lichtinitiatoren wie z.B. Benzoinisobutylether (H.J. Hagemann, Progress in Org. Coatings 13, S. 123 bis 150, (1985)).

Es ist auch möglich, Gemische von erfindungsgemäßen (Meth)acrylsäureestern eines Polysiloxans einzusetzen.

Die erfindungsgemäßen kontaktoptischen Gegenstände enthalten im allgemeinen 30 bis 96 Gew.-Teile, bevorzugt 35 bis 85 Gew.-Teile, eines (Meth)acrylsäureesters eines Polysiloxans.

Insbesondere bevorzugt werden als (Meth)acrylsäureester eines Polysiloxans die Umsetzungsprodukte von $\gamma$-Methacryloxypropyl-trimethoxysilan mit Dimethyldichlorsilan und Trimethylmonochlorsilan nach EP-A-122 061, $\gamma$-Methacryloxypropyl-tris(trimethylsiloxy)silan, 1,3-Bis($\gamma$-methacryloxypropyl)-1,1,3,3-tetra-(trimethylsiloxy)disiloxan und Umsetzungsprodukte von Isocyanatoethylmethacrylat mit hydroxyalkylterminierten, verzweigten oder cyclischen Polysiloxanen (EP-A-127 321).

Die erfindungsgemäßen kontaktoptischen Gegenstände können gegebenenfalls als Komponente C) ein Vinylmonomer enthalten. Bevorzugte Vinylmonomere sind beispielsweise N-Vinyllactam und Methacrylsäure-Derivate.

Als N-Vinyllactame seien beispielsweise N-Vinylpyrrolidon; als Methacrylsäure-Derivate, Methacrylsäure, Methacrylamid, Methacrylsäure ($C_1$ bis $C_{12}$)-alkylester, Methacrylsäure-monooxy- oder dioxy-($C_2$ bis $C_6$)-alkylester und Methacrylsäureglycidylester genannt.

Es ist auch möglich, Gemische von erfindungsgemäßen Vinylmonomeren einzusetzen.

Die erfindungsgemäßen kontaktoptischen Gegenstände enthalten im allgemeinen bis zu 66 Gew.-Teile, bevorzugt 10 bis 60 Gew.-Teile eines Vinylmonomers C).

Es wurde ein Verfahren zur Herstellung von kontaktoptischen Gegenständen gefunden, das dadurch gekennzeichnet ist, daß man

A) 4 bis 55 Gew.-Teile eines N-Vinylcarbonsäureamids der Formel

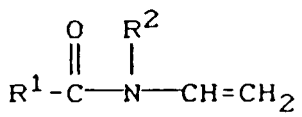

(I) ,

in der

$R^1$ und $R^2$ gleich oder verschieden sind und Wasserstoff oder $C_1$-$C_6$-Alkyl bedeuten,

B) 96 bis 30 Gew.-Teile von (Meth)acrylsäureester eines Polysiloxans und gegebenenfalls

C) bis zu 66 Gew.-Teile eines Vinylmonomers

in Gegenwart eines Radikalstarters polymerisiert.

Als Radikalstarter können beispielsweise Peroxide, wie z.B. Dibenzylperoxid, Dilaurylperoxid oder Azoverbindungen wie z.B. Azoisobuttersäuredinitril verwendet werden. Es ist selbstverständlich auch möglich, die Polymerisation durch Licht auszulösen.

Die Polymerisation kann dabei durch sogenannte Polymerisation im Block in Plattenkammern, Glas-oder Kunststoffnäpfchen durchgeführt werden.

Eine bevorzugte Ausführungsform des erfindungsgemäßen Verfahrens ist die Polymerisation der Bestandteile in Kunststoffnäpfchen aus Polyolefin, wie z.B. Polyethylen, Polypropylen, Polymethylpenten-1; Polyamiden oder Polyacetalen. Die Näpfchen können die für einen Rohling der kontaktoptischen Gegenstände beispielsweise für die fertige Linse, entsprechende Gestalt haben.

Die Polymerisation kann auch unter Zusatz von Lösungsmitteln wie Ethylenglykol, Wasser oder Ethanol

erfolgen. Die Lösungsmittel können gegebenenfalls später mit Wasser herausgewaschen werden.

Die Copolymeren können während oder nach der Polymerisation vernetzt werden.

Die Vernetzung kann in an sich bekannter Weise z.B. durch Einwirkung hochenergetischer Strahlung, z.B. Elektronenstrahlen, auf das fertige Copolymerisat oder durch Mitverwendung von 0,01 bis 6 Gew.-%, bevorzugt 0,1 bis 5 Gew.-%, insbesondere bevorzugt 0,2 bis 1 Gew.-%, an mindestens zwei olefinisch ungesättigte Gruppen aufweisenden Vernetzern bei der Copolymerisation bewirkt werden.

Geeignete Vernetzer können beispielsweise (Meth)acryl-ester- Vernetzer und/oder Vinyl-oder Allyl-Vernetzer sein.

Die (Meth)acryl-ester-Vernetzer sind an sich bekannt, welche neben einer (Meth)acrylestergruppe noch mindestens eine weitere gleiche oder verschiedene olefinisch ungesättigte Gruppe aufweisen. Hierzu gehören Acrylsäure- oder Methacrylsäureester von mehrfunktionellen Alkoholen, wie z.B. Ethylenglykoldimethylacrylat, Propylenglykoldimethacrylat, Diethylenglykoldimethacrylat, Triethylenglykoldimethylacrylat, Polyethylenglykoldimethacrylat, 1,4-Butandiol-dimethacrylat, 1,6-Hexandiol-dimethacrylat, Trimethylolpropantrimethacrylat, Pentaerythrittri- und tetramethacrylat, Methyl-1,5-pentandiol-dimethacrylat, Dihydrodicyclopentandienyl-monomethacrylat, Allylmethacrylat, Vinylmethacrylat und Bisphenol-A-dimethacrylat. Es können selbstverständlich auch die entsprechenden Acrylsäureester, z.B. die Methyl oder Ethylester, eingesetzt werden.

Vinyl- oder Allyl-Vernetzer sind durch die Vinyl- oder Allylgruppe gekennzeichnet. Beispiele für solche an sich bekannten Monomeren sind Butandiol-divinylether, Divinylethylenharnstoff, Divinylpropylenharnstoff, Divinyladipat, Divinylbenzol, Divinylphthalat, Triallyl-cyanurat, Triallylisocyanurat, Diethylenglykol-diallylcarbonat, Diallylmaleat, Diallylitaconat, Trimethylolpropan-di- und triallylether, Triallyltrimellitat und N,N-Diallylmelamin.

Vorzugsweise werden bei der Copolymerisation sowohl der (Meth)acrylester-Vernetzer als auch der Vinyl- oder Allyl-Vernetzer in einem Gewichtsverhältnis von 0,1 zu 3 bis 3 zu 0,1, bevorzugt 0,1 zu 2, insbesondere bevorzugt etwa 0,1 zu 1, eingesetzt. Durch die genannte Kombination der beiden Vernetzertypen erhält man vorteilhafterweise kontaktoptische Gegenstände mit hoher Transparenz und Radienstabilität. Die so erhaltenen Materialien enthalten praktisch keine wasserextrahierbaren Anteile.

Die Copolymerisate sind im allgemeinen statistisch aufgebaut und können die Struktur von durchdrungenen Netzwerken besitzen.

Die Glasübergangstemperaturen liegen je nach Art der Polysiloxan-(meth)acryl-Monomere im Bereich von -80 bis +100 °C Geradkettige Polysiloxan-Reste ergeben Polymere mit niedriger Glasübergangstemperatur und dementsprechend weiche, kautschukelastische kontaktoptische Gegenstände.

(Meth)acrylsäure-Derivate mit verzweigten Polysiloxan-Resten geben Polymere mit einer höheren Glasübergangstemperatur und demnach halbharte bis harte kontaktoptische Gegenstände.

Je nach Anteil der hydrophilen Monomerbausteine im Copolymerisat kann dessen Wasseraufnahmevermögen in breiten Grenzen variiert werden, z.B. im Bereich von 2 bis 70 Gew.-%, bezogen auf den hydratisierten Zustand. Gegenüber herkömmlichen Weichlinsen haben die erfindungsgemäß hergestellten Linsen den Vorteil, daß sie auf ein geringeres Wasseraufnahmevermögen eingestellt werden können und trotzdem auf dem Auge den angestrebten Tragekomfort einer Weichlinse mit entsprechend hoher Sauerstoffdurchlässigkeit aufweisen.

Das erfindungsgemäß zu verwendende Material ist hervorragend geeignet zur Herstellung von dünnen bis sehr dünnen VT-Linsen. Bei geringer Wasseraufnahme findet bei der Hydratisierung nur eine geringe Dickenzunahme statt. Unter dünnen bis sehr dünnen Linsen versteht man Linsen mit einer Mittendicke von 0,04 bis 0,15 mm bei Konstruktion für Minuslinsen (zur Korrektur von Kurzsichtigkeit), von 0,08 bis 0,4 mm bei Pluslinsen (zur Korrektur von Weitsichtigkeit) und 0,1 bis 0,4 mm bei Aphakie-Linsen (zur Korrektur von Linsenlosigkeit). Durch entsprechende Innengeometrie (asphärische Bauart) kann ein erhöhter Austausch an Tränenflüssigkeit erzeugt und damit die Verträglichkeit auf dem Auge erhöht werden.

Die dünnen bis sehr dünnen Linsen besitzen gegenüber herkömmlichen Linsen mit einer Mittendicke von mehr als 0,15 mm eine erhöhte Durchlässigkeit für Sauerstoff, was sich insbesondere bei verlängertem Tragen von Kontaktlinsen als Vorzug erweist.

Ein besonderer Vorteil der erfindungsgemäßen kontaktoptischen Gegenstände ist die gute Benetzbarkeit, die auch nach langjährigem Tragen erhalten bleibt. Herkömmliche kontaktoptische Gegenstände, insbesondere Linsen auf Basis von Polysilikonmethacrylat verlieren nach mehrmonatigem Tragen ihre Benetzbarkeit und müssen oberflächlich nachbehandelt werden. Durch Reduzierung von Ablagerungen auf der Oberfläche der kontaktoptischen Gegenstände bleiben die Materialeigenschaften des hoch gasdurchlässigen Polymers erhalten. Sehstörungen und die Retentionen am Auge werden vermieden, mögliche Allergisierungen bei häufiger Benutzung von Intensivreinigern können umgangen werden.

Die erfindungsgemäßen kontaktoptischen Gegenstände benötigen keine Oberflächenbehandlung zur

Verbesserung der Verträglichkeit, wie z.B. eine Corona- oder Plasma-Behandlung.

Beispiele

Herstellung von Methacrylsäureester von Polymethylsiloxanen

a) Das Methacrylpolydimethylsiloxan wurde durch Hydrolyse und Äquilibrierung aus 0,316 Mol γ-Methacryloxypropyltrimethoxysilan (MEMO), 2,528 Mol Dimethyldichlorsilan und 0,316 Mol Trimethylmonochlorsilan in 600 ml eines Methanol:Wasser-Gemisches 1:1 bei 45 °C hergestellt. Nach der Silicium-Analyse bestand das Monomer aus 90 Mol-% Polydimethylsiloxan.

b) γ-Methacryloxypropyl-tris(trimethylsiloxy)silan (TRIS) wurde durch Hydrolyse von 0,1 mol γ-Methacryloxypropyl-trimethoxysilan (MEMO) und 0,35 mol Chlorotrimethylsilan und anschließender Destillation analog zu Beispiel a) dargestellt.

c) 1,3-Bis(γ-methacryloxypropyl)-1,1,3,3-tetra(trimethylsiloxy)disiloxan (TETRA) wurde analog Beispiel b) mit 0,1 mol γ-Methacryloxypropyltrimethoxysilan (MEMO) und 0,2 mol Chlorotrimethylsilan dargestellt.

d) Das Methacrylurethanpolydimethylsiloxan wurde durch Umsetzung von 2-Isocyanatoethyl-methacrylat mit einem verzweigten, OH-Gruppen enthaltenden Polydimethylsiloxanalkanol der Molmasse 250 mit einer terminalen Hydroxypropyl-Gruppe im Molverhältnis von 1:1 und Anwesenheit von 0,15 mol-% Dibutylzinndilaurat bei 70 °C innerhalb von 6 Stunden in Methylenchlorid hergestellt und die flüchtigen Bestandteile im Vakuum am Rotationsverdampfer bei 80 °C abgezogen.

Beispiele 1 bis 6

Monomermischungen der in der nachstehenden Tabelle 1 aufgeführten Zusammensetzungen wurden in zylindrische Näpfchen aus Polypropylen mit 12 mm Durchmesser und 10 mm Höhe unter Luftausschluß eingefüllt und mit einem Stempel versehen. Die gefüllten Formen wurden 3 Tage mit UV-Fluoreszenzlicht bei 40 °C bestrahlt, entformt und im Trockenschrank 12 Stunden bei 80 °C und danach 12 Stunden bei 120 °C nachbehandelt. Aus den Rohlingen wurde durch Drehen und Polieren Kontaktlinsen hergestellt.

Tabelle 1

| Zusammensetzung in Gew.-Teilen | Beispiele 1 | 2 | 3 | 4 | 5 | 6 |
|---|---|---|---|---|---|---|
| N-Methyl-N-vinyl-acetamid | 5 | 10 | 7 | 7 | 5 | 5 |
| Methylmethacrylat | 25 | 25 | 25 | 25 | 35 | 55 |
| MEMO | 70 | - | - | - | - | - |
| Polysiloxanmethacrylate Beispiel a) | - | 65 | 68 | - | - | - |
| TRIS | - | - | - | - | 60 | 30 |
| TETRA | - | - | - | - | - | 10 |
| Methacrylurethanpolydimethylsiloxan (Beispiel d) | - | - | - | 68 | - | - |
| Ethylenglykoldimethacrylat | 0,5 | 0,5 | 0,5 | 0,5 | 1,0 | - |
| Triallylcyanurat | 1,0 | 1,0 | 1,0 | 1,0 | 1,4 | - |
| Azodiisobuttersäuredinitril | 0,05 | 0,05 | 0,05 | 0,05 | 0,05 | 0,05 |

Die nach den Beispielen 1 bis 6 hergestellten Linsen wurden 6 Tage mit Ionenaustauscher Wasser dialysiert und in 1 %ige Kochsalzlösung konditioniert. Das Wasseraufnahmevermögen ist in der nachfolgenden Tabelle 2 angegeben:

Tabelle 2

| Wasseraufnahmevermögen in Gew.-%, bezogen auf feuchten Zustand | | | | | | |
|---|---|---|---|---|---|---|
| Linsen nach Beispiel | 1 | 2 | 3 | 4 | 5 | 6 |
| Wasseraufnahmevermögen | 3 | 6 | 5 | 5 | 2 | 2 |

Der Tierversuch am Kaninchenauge gab nach ununterbrochenem Tragen über 30 Tage keine Reizerscheiungen. Die Linsen waren beschlagsfrei. Die nach den Beispielen 1 bis 6 hergestellten Linsen wurden von Testpersonen 6 Monate täglich 5 bis 8 Stunden im Rechs-Links-Vergleich mit handelsüblichen Silikonmethacrylat-Linsen getragen. Nach 6 Monaten zeigte sich kein Abfall in der Benetzbarkeit. Elektronenrastermikroskopische Aufnahmen der Linsenoberflächen zeigen keine Ablagerungen und keine Mikrorißbildung auf der Oberfläche. Die handelsübliche Silikonmethacrylatlinse zeigte dagegen beginnende Mikrorißbildung und ein Nachlassen der Benetzbarkeit, was sich im Abfall der subjektiven Verträglichkeit bemerkbar machte.

**Patentansprüche**

**1.** Kontaktoptische Gegenstände aus benetzbaren, gegebenenfalls vernetzten, Copolymerisaten aus olefinisch ungesättigten Monomeren, dadurch gekennzeichnet, daß das Copolymerisat als Komponenten

A) 4 bis 55 Gew.-Teile eines N-Vinylcarbonsäureamids der Formel

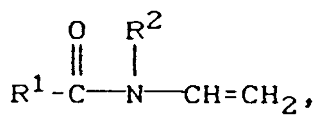

in der

$R^1$ und $R^2$ gleich oder verschieden sind und Wasserstoff oder $C_1$-$C_6$-Alkyl bedeuten,

B) 96 bis 30 Gew.-Teile eines (Meth)acrylsäureesters eines Polysiloxans und gegebenenfalls

C) bis zu 66 Gew.-Teile eines Vinylmonomers

enthält.

**2.** Kontaktoptische Gegenstände nach Anspruch 1, dadurch gekennzeichnet, daß man 5 bis 15 Gew.-Teile des N-Vinylcarbonsäureamids einsetzt.

**3.** Kontaktoptische Gegenstände nach Anspruch 1 und 2, dadurch gekennzeichnet, daß als N-Vinylcarbonsäureamid N-Methyl-N-vinylacetamid eingesetzt wird.

**4.** Kontaktoptische Gegenstände nach den Ansprüchen 1 bis 3, dadurch gekennzeichnet, daß man 85 bis 35 Gew.-Teile eines (Meth)acrylsäureesters eines Polysiloxans einsetzt.

**5.** Kontaktoptische Gegenstände nach den Ansprüchen 1 bis 4, dadurch gekennzeichnet, daß man einen (Meth)acrylsäureester eines Polysiloxans der Formel

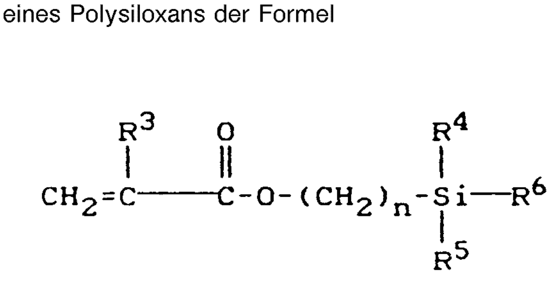

,

in der

n für eine Zahl von 1 bis 4 steht,

$R^3$ Wasserstoff oder Methyl bedeutet,
$R^4$, $R^5$ und $R^6$ gleich oder verschieden sind und Alkoxyl, $C_1$-$C_6$-Alkyl, Cycloalkyl, Aryl, Trimethylsiloxyl oder Polysiloxan bedeuten,

einsetzt.

**6.** Kontaktoptische Gegenstände nach den Ansprüchen 1 bis 4, dadurch gekennzeichnet, daß man einen (Meth)acrylsäureester eines Polysiloxans der Formel

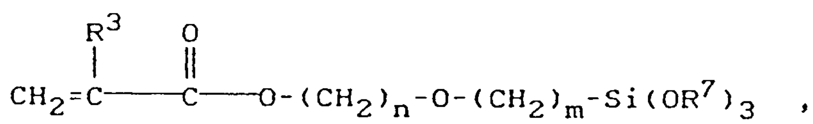

in der

n und m gleich oder verschieden sind und jeweils für eine Zahl von 1 bis 3 stehen,
$R^3$ Wasserstoff oder Methyl bedeutet,
$R^7$ $C_1$-$C_6$-Alkyl, Cycloalkyl oder Polysiloxan bedeutet,

einsetzt.

**7.** Kontaktoptische Gegenstände nach den Ansprüchen 1 bis 4, dadurch gekennzeichnet, daß man einen (Meth)acrylsäureester eines Polysiloxans der Formel

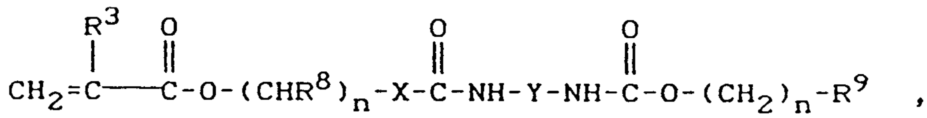

in der

n für eine Zahl von 1 bis 4 steht,
$R^3$ Wasserstoff oder Methyl bedeutet,
$R^8$ Wasserstoff, $C_1$-$C_6$-Alkyl oder Hydroxy bedeutet,
$R^9$ für Polysiloxan steht,
X = Sauerstoff, Schwefel oder den Rest

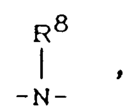

in der

$R^8$ die obengenannte Bedeutung hat, bedeutet, und
Y für ein zweibindiges $C_2$ bis $C_{24}$-Alkylen, $C_5$ bis $C_8$ Cycloalkylen, $C_6$ bis $C_{12}$ Arylen oder einen zweibindigen Rest mit 7 bis 20 Kohlenstoffatomen aus Alkylen, Cycloalkylen und/oder Arylengruppen steht,

einsetzt.

**8.** Kontaktoptische Gegenstände nach den Ansprüchen 1 bis 4, dadurch gekennzeichnet, daß man einen (Meth)acrylsäureester eines Polysiloxans der Formel

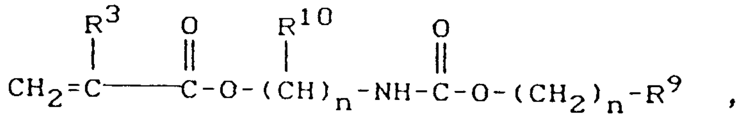

in der
n für eine Zahl von 1 bis 6 steht,
$R^3$ Wasserstoff oder Methyl bedeutet,
$R^9$ für Polysiloxan steht und
$R^{10}$ Wasserstoff, $C_1$-$C_6$-Alkyl oder Cycloalkyl bedeutet,
einsetzt.

**9.** Kontaktoptische Gegenstände nach den Ansprüchen 1 bis 8, dadurch gekennzeichnet, daß man 10 bis 60 Gew.-Teile eines Vinylmonomers einsetzt.

**10.** Kontaktoptische Gegenstände nach den Ansprüchen 1 bis 9, dadurch gekennzeichnet, daß man als Vinylmonomer ein N-Vinyllactam und/oder ein (Meth)acrylsäure-Derivat einsetzt.

**11.** Verfahren zur Herstellung von kontaktoptischen Gegenständen, dadurch gekennzeichnet, daß man
A) 4 bis 55 Gew.-Teile eines N-Vinylcarbonsäureamids der Formel

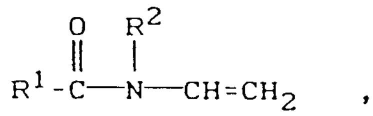

in der
$R^1$ und $R^2$ gleich oder verschieden sind und Wasserstoff oder $C_1$-$C_6$-Alkyl bedeuten,
B) 96 bis 30 Gew.-Teile von (Meth)acrylsäureester eines Polysiloxans und gegebenenfalls
C) bis zu 66 Gew.-Teile eines Vinylmonomers
in Gegenwart eines Radikalstarters polymerisiert.

**12.** Verwendung von benetzbaren, gegebenenfalls vernetzten, Copolymerisaten, enthaltend als Komponenten
(A) 4 bis 55 Gew.-Teile eines N-Vinylcarbonsäureamids der Formel

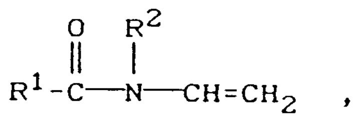

in der
$R^1$ und $R^2$ gleich oder verschieden sind und Wasserstoff oder $C_1$-$C_6$-Alkyl bedeuten,
B) 96 bis 30 Gew.-Teile von (Meth)acrylsäureester eines Polysiloxans und gegebenenfalls
C) bis zu 66 Gew.-Teile eines Vinylmonomers
für kontaktoptische Gegenstände.

**13.** Verwendung nach Anspruch 12 für Kontaktlinsen oder Skleralschalen.

**Claims**

**1.** Optical contact objects made from wettable, optionally cross-linked copolymers of olefinically unsaturated monomers, characterized in that the copolymer contains as components
A) 4 to 55 parts by weight of an N-vinylcarboxamide of the formula

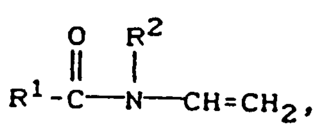

in which

$R^1$ and $R^2$ are identical or different and denote hydrogen or $C_1$-$C_6$-alkyl,

B) 96 to 30 parts by weight of a (meth)acrylate of a polysiloxane, and, if appropriate,

C) up to 66 parts by weight of a vinyl monomer.

**2.** Optical contact objects according to Claim 1, characterized in that 5 to 15 parts by weight of the N-vinylcarboxamide are employed.

**3.** Optical contact objects according to Claim 1 and 2, characterized in that N-methyl-N-vinylacetamide is employed as N-vinylcarboxamide.

**4.** Optical contact objects according to Claims 1 to 3, characterized in that 85 to 35 parts by weight of a (meth)acrylate of a polysiloxane are employed.

**5.** Optical contact objects according to Claims 1 to 4, characterized in that a (meth)acrylate of a polysiloxane of the formula in which

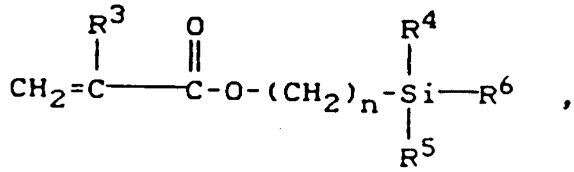

| | |
|---|---|
| n | represents a number from 1 to 4, |
| $R^3$ | denotes hydrogen or methyl, and |
| $R^4$, $R^5$ and $R^6$ | are identical or different and denote alkoxyl, $C_1$-$C_6$-alkyl, cycloalkyl, aryl, trimethylsiloxyl or polysiloxane, |

is employed.

**6.** Optical contact objects according to Claims 1 to 4, characterized in that a (meth)acrylate of a polysiloxane of the formula

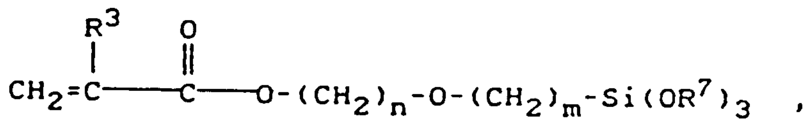

in which

| | |
|---|---|
| n and m | are identical or different and in each case represent a number from 1 to 3, |
| $R^3$ | denotes hydrogen or methyl, and |
| $R^7$ | denotes $C_1$-$C_6$-alkyl, cycloalkyl or polysiloxane, |

is employed.

**7.** Optical contact objects according to Claims 1 to 4, characterized in that a (meth)acrylate of a polysiloxane of the formula

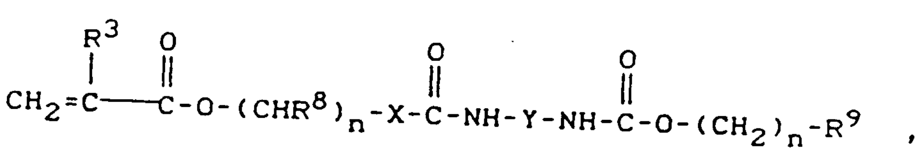

in which

| | |
|---|---|
| n | represents a number from 1 to 4, |
| $R^3$ | denotes hydrogen or methyl, |

$R^8$ denotes hydrogen, $C_1$-$C_6$-alkyl or hydroxyl,
$R^9$ represents polysiloxane,
X denotes oxygen, sulphur or the

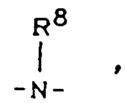

radical,
in which
$R^8$ has the abovementioned meaning, and
Y represents a divalent $C_2$ to $C_{24}$-alkylene, $C_5$ to $C_8$ cycloalkylene, $C_6$ to $C_{12}$ arylene or a divalent radical having 7 to 20 carbon atoms selected from alkylene, cycloalkylene and/or arylene groups,
is employed.

**8.** Optical contact objects according to Claims 1 to 4, characterized in that a (meth)acrylate of a polysiloxane of the formula

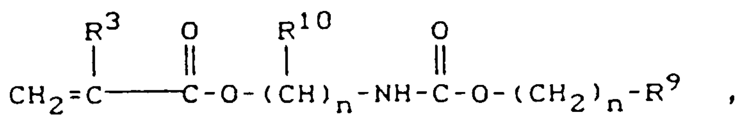

in which
n represents a number from 1 to 6,
$R^3$ denotes hydrogen or methyl,
$R^9$ represents polysiloxane, and
$R^{10}$ denotes hydrogen, $C_1$-$C_6$-alkyl or cycloalkyl,
is employed.

**9.** Optical contact objects according to Claims 1 to 8, characterized in that 10 to 60 parts by weight of a vinyl monomer are employed.

**10.** Optical contact objects according to Claims 1 to 9, characterized in that an N-vinyllactam and/or a (meth)acrylate derivative is employed as vinyl monomer.

**11.** Process for the preparation of optical contact objects, characterized in that
A) 4 to 55 parts by weight of an N-vinylcarboxamide of the formula

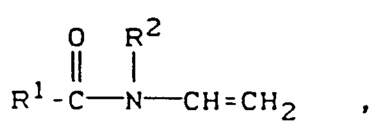

in which
$R^1$ and $R^2$ are identical or different and denote hydrogen or $C_1$-$C_6$-alkyl,
B) 96 to 30 parts by weight of a (meth)acrylate of a polysiloxane, and, if appropriate,
C) up to 66 parts by weight of a vinyl monomer,
are polymerized in the presence of a radical initiator.

**12.** Use of wettable, optionally crosslinked copolymers, containing as components
A) 4 to 55 parts by weight of an N-vinylcarboxamide of the formula

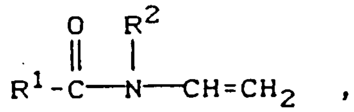

in which

$R^1$ and $R^2$ are identical or different and denote hydrogen or $C_1$-$C_6$-alkyl,

B) 96 to 30 parts by weight of a (meth)acrylate of a polysiloxane, and, if appropriate,

C) up to 66 parts by weight of a vinyl monomer,

for optical contact objects.

**13.** Use according to Claim 12 for contact lenses or scleral lenses.

## Revendications

**1.** Verres de contact en copolymères mouillables, éventuellement réticulés, à base de monomères à insaturation oléfinique, caractérisés en ce que le copolymère contient comme composants

A) 4 à 55 parties en poids d'un amide d'acide N-vinylcarboxylique de formule

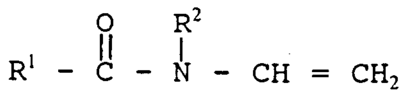

dans laquelle

$R^1$ et $R^2$ sont identiques ou différents et signifient l'hydrogène ou un groupe alkyle en $C_1$- $C_6$,

B) 96 à 30 parties en poids d'ester (méth)acrylique d'un polysiloxane et éventuellement

C) jusqu'à 66 parties en poids d'un monomère vinylique.

**2.** Verres de contact selon la revendication 1, caractérisés en ce que l'on utilise 5 à 15 parties en poids d'amide d'acide N-vinylcarboxylique.

**3.** Verres de contact selon les revendications 1 et 2, caractérisés en ce qu'on emploie comme amide d'acide N-vinylcarboxylique le N-méthyl-N-vinylacétamide.

**4.** Verres de contact selon les revendications 1 à 3, caractérisés en ce qu'on met en oeuvre 85 à 35 parties en poids d'un ester (méth)acrylique d'un polysiloxane.

**5.** Verres de contact selon les revendications 1 à 4, caractérisés en ce qu'on utilise un ester (méth)-acrylique d'un polysiloxane, répondant à la formule

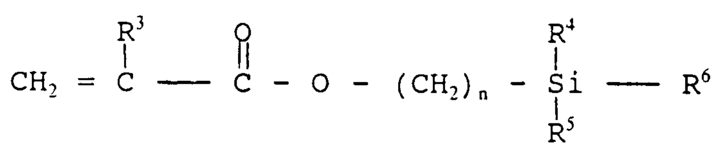

(II),

dans laquelle

| | |
|---|---|
| n | représente un nombre de 1 à 4, |
| $R^3$ | représente l'hydrogène ou un groupe méthyle, |
| $R^4$, $R^5$ et $R^6$ | sont identiques ou différents et représentent un groupe alcoxyle, alkyle en $C_1$-$C_6$, cycloalkyle, aryle, triméthylsiloxyle ou polysiloxane. |

**6.** Verres de contact selon l'une des revendications 1 à 4, caractérisés en ce que l'on utilise un ester (méth)acrylique d'un polysiloxane de formule

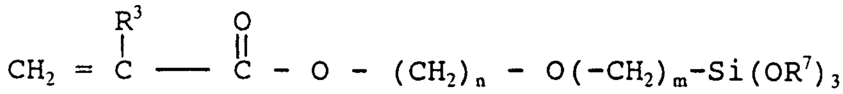

dans laquelle

n et m sont identiques ou différents et représentent chaque fois un nombre de 1 à 3,

$R^3$ signifie l'hydrogène ou un groupe méthyle,

$R^7$ signifie alkyle en $C_1$-$C_6$, cycloalkyle ou polysiloxane.

**7.** Verres de contact selon les revendications 1 à 4, caractérisés en ce que l'on utilise un ester (méth)-acrylique de formule

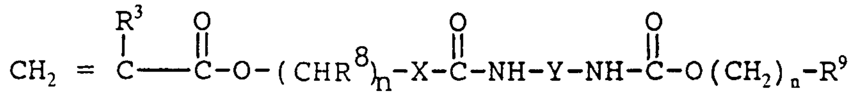

dans laquelle

n représente un nombre de 1 à 4,

$R^3$ signifie l'hydrogène ou un groupe méthyle,

$R^8$ signifie l'hydrogène, alkyle en $C_1$-$C_6$ ou hydroxy,

$R^9$ signifie polysiloxane,

X signifie l'oxygène, le soufre ou le reste

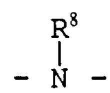

dans lequel

$R^8$ possède la signification décrite ci-dessus,

et

Y représente un groupe alkylène en $C_2$ à $C_{24}$ lié deux fois, cycloalkylène en $C_5$ à $C_8$, arylène en $C_6$ à $C_{12}$ ou un reste choisi parmi les groupes alkylène, cycloalkylène et/ou arylène lié deux fois présentant 7 à 20 atomes de carbone.

**8.** Verres de contact selon les revendications 1 à 4, caractérisés en ce que l'on utilise un ester (méth)-acrylique de polysiloxane répondant à la formule

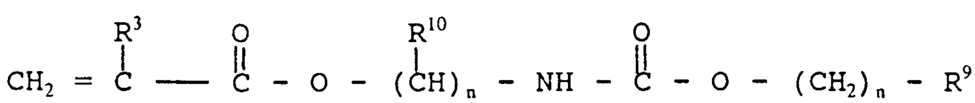

dans laquelle

n représente un nombre de 1 à 6,

$R^3$ signifie l'hydrogène ou un groupe méthyle,

$R^9$ signifie polysiloxane et

$R^{10}$ signifie l'hydrogène, alkyle en $C_1$-$C_6$ ou cylcoalkyle.

**9.** Verres de contact selon l'une des revendications 1 à 8, caractérisés en ce que l'on utilise 10 à 60 parties en poids d'un monomère vinylique.

**10.** Verres de contact selon l'une des revendications 1 à 9, caractérisé en ce que l'on utilise comme monomère vinylique un N-vinyllactame et/ou un dérivé d'acide (méth)acrylique.

**11.** Procédé pour fabriquer des verres de contact, caractérisé en ce que l'on polymérise, en présence d'un

initiateur radicalaire:

A) 4 à 55 parties en poids d'un amide d'acide N-vinylcarboxylique de formule

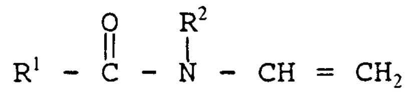

dans laquelle

$R^1$ et $R^2$ sont identiques ou différents et signifient l'hydrogène ou alkyle en $C_1$-$C_6$,

B) 96 à 30 parties en poids d'ester (méth)acrylique d'un polysiloxane, et éventuellement

C) jusqu'à 66 parties en poids d'un monomère vinylique.

**12.** Utilisation de copolymères mouillables, éventuellement réticulés, contenant comme composants

A) 4 à 55 parties en poids d'un amide d'acide N-vinylcarboxylique de formule

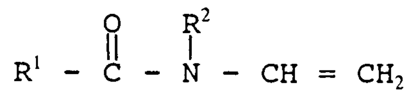

dans laquelle

$R^1$ et $R^2$ sont identiques ou différents et signifient l'hydrogène ou un groupe alkyle en $C_1$- $C_6$,

B) 96 à 30 parties en poids d'ester (méth)acrylique d'un polysiloxane et éventuellement

C) jusqu'à 66 parties en poids d'un monomère vinylique, pour des verres de contact.

**13.** Utilisation selon la revendication 12 pour des lentilles cornéennes ou des lentilles sclérales.